(19) Europäisches Patentamt
European Patent Office
Office européen des brevets

(11) **EP 2 537 957 A1**

(12) **EUROPEAN PATENT APPLICATION**

(43) Date of publication:
**26.12.2012 Bulletin 2012/52**

(51) Int Cl.:
**C23C 18/12** (2006.01)  **C01G 23/053** (2006.01)
**B82Y 30/00** (2011.01)

(21) Application number: **11171348.3**

(22) Date of filing: **24.06.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Universiteit Gent**
**9052 Zwijnaarde (BE)**

(72) Inventors:
• **Van Driessche, Isabel**
**9250 Waasmunster (BE)**

• **Lommens, Petra**
**9700 Ename (BE)**
• **Arin, Melis**
**9000 Gent (BE)**

(74) Representative: **Vanhalst, Koen**
**De Clercq & Partners cvba**
**E. Gevaertdreef 10a**
**9830 Sint-Martens-Latem (BE)**

(54) **Low-temperature method for producing transparent photocatalytically active titania layers**

(57) The present invention relates to methods for producing photocatalytically active titanium dioxide layers. The invention further relates to nanoparticle dispersions for use in these methods, and substrates coated with titanium dioxide layers obtained by these methods.

Figure 1

**EP 2 537 957 A1**

## Description

## FIELD OF THE INVENTION

The present invention relates to methods for producing photocatalytically active titanium dioxide layers. The invention further relates to nanoparticle dispersions for use in these methods, and substrates coated with titanium dioxide layers obtained by these methods.

## BACKGROUND

In recent years, titanium dioxide, a high energy band gap semiconductor, has received considerable interest because of its photocatalytic activity under UV-irradiation. Moreover, thin $TiO_2$ coatings of good quality are transparent and colorless and can be used to create self-cleaning, antifogging and superhydrophilic surfaces.

Currently, photocatalytically active $TiO_2$ coatings for commercial purposes are typically obtained via chemical vapor deposition. However, $TiO_2$ films prepared by chemical solution deposition methods are attracting more and more attention, because of the relatively simple production of high purity films at low cost and high scalability. Various chemical solution deposition methods for the production of $TiO_2$ films are known in the art. Some of these methods rely on controlled hydrolysis in alcoholic media, although some methods based on more environmentally friendly water-based precursors have been reported. However, these methods have various drawbacks, which limits their applicability for industrial application. Indeed, the aqueous precursors often have very low pH values (pH 1-2) or comprise high concentrations of corrosive compounds such as $H_2O_2$, which complicates further industrial handling and can damage the substrate. A more general problem, even with less hazardous precursor solutions, is that the sintering of the $TiO_2$ films requires relatively high temperatures (500°C-650°C) (Arin et al. J. Eur. Ceram. Soc. 2011, vol. 31, p. 1067-1074) to produce crystalline materials and make the coatings photocatalytically active. Besides their relatively high energy consumption, these processes therefore do not allow the coating of certain temperature sensitive substrates, e.g. polymer substrates and metals. Accordingly, there is a need for improved methods for producing $TiO_2$ films, which mitigate at least partially the problems stated above. Specifically, the present invention aims to provide economical, environmentally and substrate friendly methods for the low-temperature production of optically transparent and photocatalytically active films, based on aqueous nanoparticle dispersions, which still have the advantages of the known chemical solution deposition methods.

## SUMMARY OF THE INVENTION

The present invention relates to methods for producing photocatalytically active titanium dioxide layers at temperatures as low as 100°C, wherein the production methods are based on the use of aqueous nanoparticle dispersions. The invention further relates to the use of nanoparticle dispersions in these methods, and titanium dioxide layers obtained by these methods.

In a first aspect, the present invention provides a method for coating a solid substrate with a photocatalytically active $TiO_2$ layer. Preferably, said method for coating comprises the steps of:

(i) deposition of an aqueous dispersion of $TiO_2$ nanoparticles onto said substrate;
(ii) optionally, thermal treatment of said substrate at a temperature below 100°C; and
(iii) thermal treatment of said substrate at a temperature between 300°C and 100°C. In particular embodiments, this step is carried out at a temperature between 150°C and 100°C.

In particular embodiments, the photocatalytically active $TiO_2$ layer further is optically transparent.

In particular embodiments, at least 95% of said nanoparticles have a size between 1 and 250 nm. In certain embodiments, the nanoparticles are substantially crystalline. In certain embodiments, the nanoparticles are doped with one or more elements selected from the group comprising nitrogen, carbon, sulphur, silver, or combinations thereof.

In particular embodiments, the aqueous dispersion of $TiO_2$ nanoparticles used in step (i) has a pH of between 4 and 10. In certain embodiments, the dispersion of nanoparticles comprises at least one multidentate ligand selected from the group comprising polyphosphates, diketones, polyamino carboxylic acids, acid anhydrides, diols, triols, polyols, polyethers, aminoalcohols, amino acids and multidentate amines. In further embodiments, the multidentate ligand is selected from the group comprising citric acid, acetylacetone, diethylenetriaminepentaacetic acid, ethylenediaminetetraacetic acid and triethanolamine.

In certain embodiments, the aqueous dispersion of $TiO_2$ nanoparticles used in step (i) comprises an alcohol.

In particular embodiments, step (i) of the method for coating according to the present invention is performed via ink-jet printing. In certain embodiments, the substrate is made at least partially of a polymer. In particular embodiments, the average thickness of the $TiO_2$ layer is between 20 and 100 nm.

In particular embodiments, a method for coating a solid substrate with a photocatalytically active $TiO_2$ layer according to the present invention further comprises, prior to step (i), the preparation of the nanoparticle dispersion for use in step (i). Preferably, said method for the preparation of the nanoparticle dispersion comprises the steps of:

a) producing an aqueous precursor solution comprising a Ti source selected from the group comprising Ti halides, Ti(SO₄)₂ and Ti-alkoxides, and one or more ligands. In particular embodiments, the Ti source is a Ti-alkoxide.

b) producing an aqueous dispersion of $TiO_2$ nanoparticles by adding to said precursor solution one or more ligands other than said ligands of step a), and subsequent heating of said precursor solution. In particular embodiments, the heating is carried out via a microwave assisted heat treatment of the precursor solution.

Preferably, the heating of the aqueous precursor solution in step b) may be performed via hydrothermal treatment or by microwave assisted thermal treatment. In preferred embodiments, the heating of the aqueous precursor solution is performed by microwave assisted thermal treatment. In further embodiments, the temperature range obtained during microwave assisted thermal treatment is between 100°C and 140°C. In preferred embodiments, the heating time during microwave assisted thermal treatment is between 5 and 60 minutes, more preferably between 5 and 30 minutes, and even more preferably between 10 and 20 minutes, for example about 15 minutes.

In particular embodiments, at least one of said ligands of step a) and/or step b) is a multidentate ligand selected from the group comprising polyphosphates, diketones, polyamino carboxylic acids, acid anhydrides, diols, triols, polyols, polyethers, aminoalcohols, amino acids and multidentate amines. In further embodiments, the multidentate ligand is selected from the group comprising citric acid, acetylacetone, diethylenetriaminepentaacetic acid, ethylenediaminetetraacetic acid and triethanolamine.

In a second aspect, the present invention provides substrates coated with photocatalytically active $TiO_2$ layer, wherein the $TiO_2$ layer is obtained via the method for coating according to the present invention. In particular embodiments, the $TiO_2$ layer is transparent.

In a third aspect, the present invention provides an aqueous dispersion of $TiO_2$ nanoparticles, with a pH between 6 and 9 and further comprising at least one multidentate ligand selected from the group comprising polyphosphates, diketones, polyamino carboxylic acids, acid anhydrides, diols, triols, polyols, polyethers, aminoalcohols, amino acids and multidentate amines. In further embodiments, the multidentate ligand is selected from the group comprising citric acid, acetylacetone, diethylenetriaminepentaacetic acid, ethylenediaminetetraacetic acid and triethanolamine.

In certain embodiments, at least 95% of the nanoparticles have a size between 1 and 250 nm. In particular embodiments, the aqueous dispersion of $TiO_2$ nanoparticles according to this aspect of the invention comprises an alcohol, wherein the concentration of the alcohol in the composition is below 1 M. In particular embodiments, the aqueous dispersion of $TiO_2$ nanoparticles ac-

cording to this aspect of the invention comprises a quaternary ammonium compound, preferably tetramethyl ammonium hydroxide.

In a final aspect, the present invention provides the use of an aqueous dispersion of $TiO_2$ nanoparticles according to the present invention, for coating of a solid substrate with a photocatalytically active $TiO_2$ layer.

The methods according to the present invention allow for the coating of solid substrates with photocatalytically active $TiO_2$ layers of high quality at reduced temperatures, while using a water-based precursor. Therefore these methods are environmentally friendly and applicable for coating various substrates, including temperature sensitive substrates such as polymers. The coating of substrates with the photocatalytically active layers can be used to create "self-cleaning" and/or antibacterial surfaces. Additionally or alternatively, the coatings can provide antifogging properties to the substrates. Since the layers can be made optically transparent, they are particularly useful for the coating of glass or other (optically) transparent materials for use in windows, mirrors, screens, etc. The methods of the invention can also be applied to metals for corrosion protection.

## BRIEF DESCRIPTION OF THE DRAWINGS

The following description of the figures of specific embodiments of the invention is merely exemplary in nature and is not intended to limit the present teachings, their application or uses. Throughout the drawings, corresponding reference numerals indicate like or corresponding parts and features.

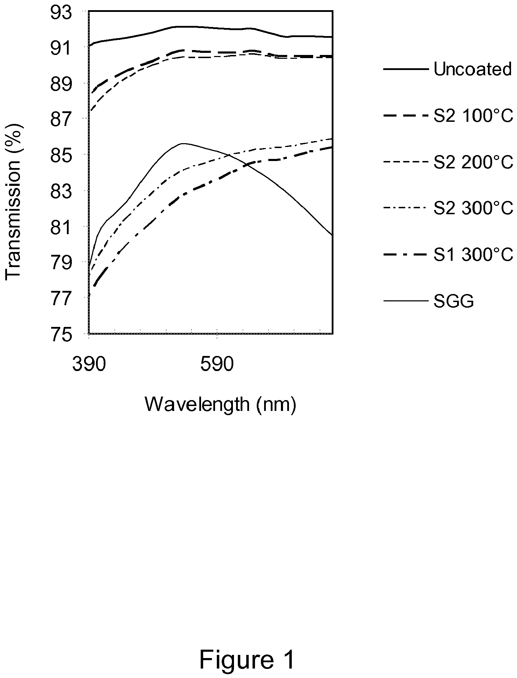

**Figure 1** UV-Vis optical transmittance spectra for different coated and uncoated glass substrates. "S1 300°C" corresponds to a nanocrystal dispersion (obtained using precursor solution 1), treated at 300°C, "S2 100°C", "S2 200°C", and "S2 300°C" correspond to nanocrystal dispersions (obtained using precursor solution 2), treated at respectively 100, 200 or 300°C, "SGG" corresponds to the solution of Saint-Gobain, cf. Example d).

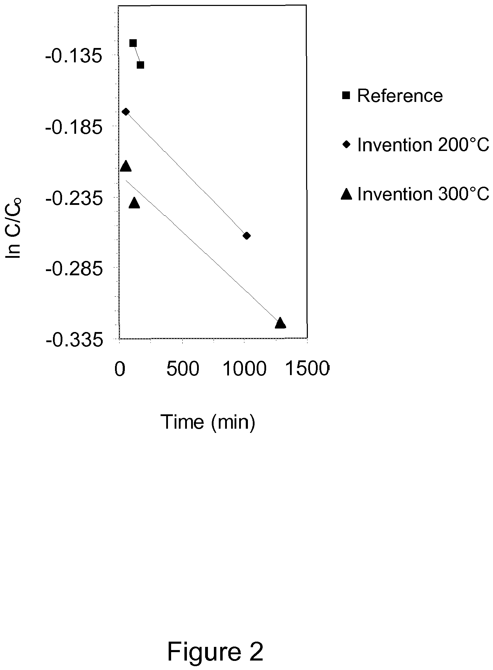

**Figure 2** Kinetics of the photocatalytic degradation of methylene blue. "Invention 200°C" and "Invention 300°C" correspond to nanocrystal dispersions (obtained using precursor solution 2), treated respectively at 200 or 300°C; "Reference" corresponds to the solution used in Arin et al., 2011, cf. example e).

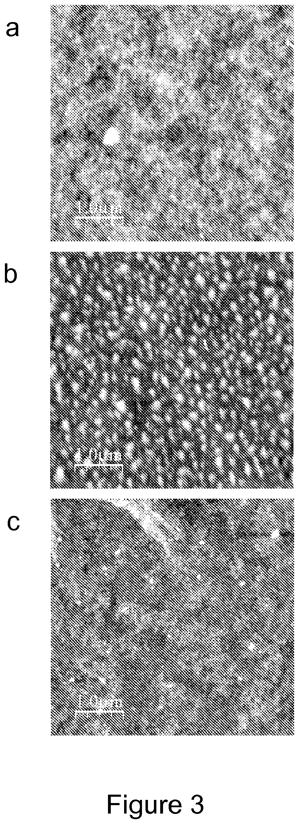

**Figure 3** Atomic Force Microscopy micrographs of photocatalytically active $TiO_2$ layers prepared according to particular embodiments of the present invention, a) nanocrystal dispersion (obtained using solution 2) treated at 100°C, b) nanocrystal dispersion (obtained using solution 2) treated at 200°C, c) nanocrystal dispersion (obtained using solution 2) treated at 300°C, cf. example f).

## DETAILED DESCRIPTION

The present invention will be described with respect to particular embodiments but the invention is not limited thereto but only by the claims. Any reference signs in the claims shall not be construed as limiting the scope thereof.

As used herein, the singular forms "a", "an", and "the" include both singular and plural referents unless the context clearly dictates otherwise.

The terms "comprising", "comprises" and "comprised of' as used herein are synonymous with "including", "includes" or "containing", "contains", and are inclusive or open-ended and do not exclude additional, non-recited members, elements or method steps. The terms "comprising", "comprises" and "comprised of" also include the term "consisting of".

Furthermore, the terms first, second, third and the like in the description and in the claims, are used for distinguishing between similar elements and not necessarily for describing a sequential or chronological order, unless specified. It is to be understood that the terms so used are interchangeable under appropriate circumstances and that the embodiments of the invention described herein are capable of operation in other sequences than described or illustrated herein.

The term "about" as used herein when referring to a measurable value such as a parameter, an amount, a temporal duration, and the like, is meant to encompass variations of +/-10% or less, preferably +/-5% or less, more preferably +/-1% or less, and still more preferably +/-0.1 % or less of and from the specified value, insofar such variations are appropriate to perform in the disclosed invention. It is to be understood that the value to which the modifier "about" refers is itself also specifically, and preferably, disclosed.

The recitation of numerical ranges by endpoints includes all numbers and fractions subsumed within the respective ranges, as well as the recited endpoints.

All documents cited in the present specification are hereby incorporated by reference in their entirety.

Unless otherwise defined, all terms used in disclosing the invention, including technical and scientific terms, have the meaning as commonly understood by one of ordinary skill in the art to which this invention belongs. By means of further guidance, definitions for the terms used in the description are included to better appreciate the teaching of the present invention. The terms or definitions used herein are provided solely to aid in the understanding of the invention. Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

The present invention relates to methods for producing photocatalytically active titanium dioxide ($TiO_2$) layers at temperatures as low as 100°C, wherein the production methods start from aqueous nanoparticle dispersions, more preferably crystalline nanoparticles and optionally one or more ligands, more preferably multidentate ligands.

The term "nanoparticle" as used herein refers to a small object which behaves as a whole unit in terms of its transport and properties, and has a size between about 0.5 and about 1000 nm. The term "photocatalytically active" as used herein refers to an ability of degrading a compound by utilizing oxidation power induced by ultraviolet light (electromagnetic radiation with a wavelength between 100 and 400 nm) and/or visible light (electromagnetic radiation with a wavelength between 400 and 760 nm) energy. Non-limiting examples of compounds which can be degraded using a titanium dioxide photocatalyst include inorganic compounds such as nitrogen oxides ($NO_x$) and sulphur oxides ($SO_x$), and organic compounds such as benzene, toluene, ethylbenzene, m-xylene, formaldehyde, acetaldehyde, methanol, ethanol, etc. Whether or not a titanium dioxide layer has photocatalytic activity can be confirmed by, for example, whether or not degradation of methyl orange or methylene blue is caused by the titanium dioxide layer.

Throughout this disclosure, the terms "photocatalytic", "antibacterial", "self-cleaning" and/or "antifogging" may be used interchangeably to convey that the antibacterial, self-cleaning and/or antifogging properties of the $TiO_2$ coatings are a result of the photocatalytic activity of the coatings.

The term "aqueous" as used herein means that more than 50 percent by volume of the solvent is water. Aqueous compositions or dispersions may further comprise organic liquids which are miscible with water.

The term "ligand" as used herein refers to a molecule or ion (other than a $H_2O$ or $OH^-$) that can donate one or more pairs of electrons to an atom or ion to form coordinate bonds. The term "multidentate ligand" as used herein refers to a ligand that can donate two or more pairs of electrons to the same atom or ion to form coordinate bonds.

In a first aspect, the present invention provides a method for coating a solid substrate with a photocatalytically active $TiO_2$ layer. The method comprises the following steps:

(i) deposition of an aqueous dispersion of $TiO_2$ nanoparticles onto the substrate;
(ii) thermal treatment of the substrate containing the $TiO_2$ nanoparticles.

The aqueous dispersion of nanoparticles can be prepared by the synthesis methods disclosed further in this text, or by other preparation methods. In preferred embodiments, the pH value (acidity) of the aqueous nanoparticle dispersion is between 4 and 10, more preferably between 5 and 9, and even more preferably between 6 and 9. A pH close to a neutral pH increases the compatibility of the dispersion with most substrate materials and with equipment for processing of the nanoparticle dispersion such as printer nozzles and the like.

In particular embodiments, the dispersion of nanoparticles further comprises one or more ligands. Ligands increase the stability of the dispersion and may also be used to control the size and shape of the particles during the nanoparticle synthesis according to particular embodiments of the present invention. Ligands may furthermore be used to control hydrolysis of the titanium (Ti) precursor prior to and during the nanoparticle synthesis according to particular embodiments of the present invention, as explained below).

Suitable ligands are those compounds having one or more carboxyl groups, carbonyl group, functional groups containing a nitrogen or oxygen with a lone electron pair (primary, secondary or tertiary amines), hydroxyl groups or combinations thereof. Also phosphates such as phosphoric acid, pyrophosphoric acid and tripolyphosphoric acid can be used as ligands.

Advantageously, at least one of the one or more ligands is a multidentate ligand. Accordingly, in particular embodiments, the dispersion of nanoparticles comprises one or more multidentate ligands. In preferred embodiments, the one or more multidentate ligands are selected from the group comprising polyphosphates, (1,3- or 1,4-) diketones, polyamino carboxylic acids, acid anhydrides, diols, triols, polyols, polyethers, aminoalcohols, amino acids and multidentate amines.

In particular embodiments, the nanoparticle dispersion comprises at least two (multidentate) ligands as described herein. In further embodiments, the nanoparticle dispersion comprises at least three (multidentate) ligands as described herein.

In particular embodiments, the aqueous dispersion of nanoparticles further comprises a quaternary ammonium compound, e.g. tetramethylammonium hydroxide.

In particular embodiments, the aqueous dispersion of nanoparticles further comprises an alcohol. Suitable alcohols include, but are not limited to methanol, ethanol, propanol, isopropanol, butanol, and the like. Preferably, the aqueous dispersion of nanoparticles further comprises ethanol. In particular embodiments, the concentration of the alcohol in the dispersion is less than 1 M.

The nanoparticle concentration in the dispersion is not critical to the present invention. However, the lower the nanoparticle concentration in the dispersion, the higher the nanoparticle dispersion volume required to achieve a certain layer thickness, which may in turn lead to an increased processing time, a decreased printing resolution, etc. On the other hand, if the nanoparticle concentration is too high, the dispersion may become unstable, i.e. the nanoparticles may aggregate and precipitate. This impedes further processing of the nanoparticle dispersions and results in a decreased quality of the $TiO_2$ films. Accordingly, in preferred embodiments, the concentration of the nanoparticles in the dispersion is between 5 and 25 percent by mass, preferably between 10 and 20 percent by mass, for example about 15 percent by mass.

The size of the nanoparticles is not critical to the present invention. However, in order to obtain optically transparent $TiO_2$ layers, and in order to use the nanoparticle dispersions for ink-jet printing, it is preferred that at least 95, 97 or 99 percent of the nanoparticles have a size between 1 and 250 nm. More preferably, at least 95, 97 or 99 percent of the nanoparticles have a size between 1 and 100 nm.

In order to have photocatalytic properties, the nanoparticles should be at least partially crystalline. In preferred embodiments, the nanoparticles are nanocrystals. This means that the nanoparticles are substantially crystalline. Nanocrystals have a higher photocatalytic activity than (substantially) amorphous nanoparticles. Crystalline $TiO_2$ occurs in nature mainly as the minerals (phases) anatase, rutile and brookite, which are phases of $TiO_2$ with a different crystal structure. The specific crystal structure of the nanocrystals is not critical to the present invention as all these phases of $TiO_2$ are photocatalytically active. Accordingly, the nanocrystals may be mono- or polycrystalline, and may have an anatase, rutile, brookite, and/or other crystal structure. The crystalline domains of an individual nanocrystal may all be of the same crystal structure or may be a combination of anatase, rutile, brookite and/or other domains. All nanocrystals in the dispersion may (substantially) have the same crystal structure, or the dispersion may comprise a mix of nanocrystals with the anatase, rutile, brookite and/or other crystal structure.

The surface-to-volume ratio of the $TiO_2$ coating, and therefore the photocatalytic activity of the coating, can be influenced by using nanoparticles of certain shapes. However, the shape of the nanoparticles is not essential to the present invention. Examples of the shape of the nanoparticles suitable for use in the present invention include sphere, rod, disk, tetrapod, other shapes or mixtures thereof.

In particular embodiments, the photocatalytically active $TiO_2$ layers obtained by the deposition method according to the present invention are optically transparent. Optically transparent layers do not alter the appearance of the substrate, and are therefore useful, for example, for the coating of building materials. The term "optically transparent" as used herein means having the property of transmitting at least 70% of the incident visible light (electromagnetic radiation with a wavelength between 400 and 760 nm) without diffusing it. The transmission of visible light, and therefore the transparency, can be measured using a UV-Vis Spectrophotometer as known to the person skilled in the art. For the transmission measurement, the layer should be deposited on a substantially transparent substrate such as a standard glass microscopy slide.

The nanoparticle dispersions according to the present invention can be deposited onto the substrate using any useful deposition technique known in the art. As the dispersions are liquid, deposition may for example occur using spin coating, drop casting, immersion coating (dip coating), ink-jet printing, blade coating, slot coating, gravure coating, microgravure™, flexo printing, spray coating, rod coating, reverse roll coating, forward roll coating, air knife coating, curtain coating, offset printing, screen printing, (micro)plotting (e.g. with a Sonoplot® Microplotter) or a combination thereof. The choice of deposition method may depend on the substrate material, thickness or flexibility, the required layer thickness, the viscosity of the dispersion, etc. In preferred embodiments, the dispersions of the present invention are deposited onto the substrate by ink-jet printing. Ink-jet printing is a non-contact deposition method which can be used to obtain large area coverage with direct patterning on almost any substrate, with little loss of nanoparticle dispersion. In order to prevent clogging of the printer nozzles by the nanoparticles, the diameter of the particles for use in ink-jet printing should not exceed a certain size, which may vary between different printer types. Preferably, the nanoparticles for use in ink-jet printing have a diameter below 250 nm, more preferably below 100 nm.

Due to the use of aqueous dispersions and low temperatures, the method of the present invention can be used for coating of substrates made of various materials. The substrate or carrier is therefore not essential to the present invention. The substrates are preferably solid, and may be made from rigid and/or flexible materials. The substrate may be of any shape, although certain deposition techniques may impose restrictions on the substrate shape, and may for example require that the substrate is flat.

Exemplary substrate materials are steel, aluminium, ceramics, glass, concrete, wood, polymers, etc. In particular embodiments, the substrates are optically and/or UV transparent. As the method according to the present invention provides the possibility to coat substrates with $TiO_2$ layers at temperatures as low as 100°C, the methods allow the coating of polymer substrates. Accordingly, in particular embodiments, the substrates are made at least partially of a polymer. In further embodiments, the substrates consist of a polymer. Suitable polymers include, but are not limited to, a natural or synthetic rubber or latex, polyvinylchloride, polyethylene, polypropylene, polystyrene, polyamides, polyesters, aramides, polyethyleneterephthalate, polymethylmethacrylate, polymethylmethacrylate or blends thereof.

Metals may be coated with $TiO_2$ for providing protection against corrosion of the metal. Accordingly, in particular embodiments, the substrate is at least partially made of a metal or a metal alloy.

The $TiO_2$ layers provided by the coating method according to the present invention are photocatalytically active and provide therefore "self-cleaning" properties to the coated substrates. In particular, the photocatalytic properties of the coatings allow the degradation of airborne pollutants such as nitrogen oxides, and volatile organic compounds. Thus, the $TiO_2$ layers provided by the coating method according to the present invention may be used for air purification purposes. As the layers can also be made optically transparent, the coating method of the present invention may be used for the coating of building materials, e.g. concrete, ceramics, etc. Also glass, for example for use in windows, screens, solar panels or mirrors, can be coated with $TiO_2$, for providing self-cleaning and/or antifogging properties.

Due to the self-cleaning and/or antibacterial properties of the $TiO_2$ coatings, the coating method according to the present invention can also be used to coat medical equipment, windows, door knobs, tiles or other surfaces for use in hospitals, or in food processing, storing or cooking areas, etc.

The wet layers obtained after the deposition of an aqueous dispersion of $TiO_2$ nanoparticles onto the substrate are not stable and are not significantly photocatalytically active. To obtain a stable and photocatalytically active coating, the wet layers deposited on the substrate need to be dried. In the method according to the present invention, the drying is performed by thermal treatment of the substrate at a temperature between 300°C and 100°C. Besides drying of the nanoparticles, at these temperatures organic compounds which may be present in the nanoparticle dispersion are (partially) removed and the stability of the coating is improved. The temperatures used for drying of the wet layers are significantly lower than the sintering temperatures required by methods known in the art, which are often above 500°C. Indeed, the layers according to the present invention already comprise particles which are at least partially crystalline (and therefore photocatalytically active) before thermal treatment of the substrate. This is in contrast with the methods known in the art, where thermal treatment of the substrate at high temperatures is needed to form crystalline layers. In particular embodiments, the thermal treatment of the substrate occurs at a temperature below 250°C, 200°C or 150°C. In certain embodiments, the thermal treatment of the substrate occurs at a temperature between 250°C and 100°C, between 200°C and 100°C, or between 150°C and 100°C. The thermal treatment may occur in any furnace capable of reaching the desired temperature and of containing the substrate to be coated, for example a tube furnace or muffle furnace. The time needed for the thermal treatment may depend on the temperature and the required layer properties, such as the layer thickness. Typically, the substrates onto which the nanoparticles are deposited are subject to a thermal treatment during 30 minutes up to three hours, preferably during one hour. The thermal treatment does not require an inert atmosphere and can therefore be performed in air.

In particular embodiments, the thermal treatment of the substrate comprises a first and a second step of thermal treatment of the substrate, and will be referred to as "first step" and "second step". The first step and the second step are performed at different temperatures and are performed after deposition of the nanoparticle dispersion onto the substrate. In the first step, the solvent, i.e. water, (substantially) evaporates, resulting in a compact layer of nanoparticles on the substrate. In the second step, the organic compounds, which may be present in the nanoparticle dispersion are (partially) removed. The second step is a thermal treatment of the substrate at a temperature between 300°C and 100°C as described here above. The first step involves a thermal treatment of the substrate at a temperature below the temperature used in the second step of thermal treatment, preferably below 100°C. The use of a mild thermal treatment below 100°C (first step) before the thermal treatment between 300°C and 100°C (second step) increases the quality and stability of the $TiO_2$ layers. Preferably, the first step is performed at a temperature above 30°C, more preferably above 40°C and even more preferably above 50°C. The first step occurs at lower temperatures than the temperature of the second step. Preferably, the first step is performed at a temperature lower than 100°C, 90°C, 80°C or 70°. For example, the first step may be performed at a temperature about 60°C. The time needed for first step may depend on the temperature. Typically, the first step requires between one hour and five hours. The first step can be performed in air.

The use of two steps of thermal treatment of the substrates is not essential, as the drying of the nanoparticles and the (partial) removal of organic compounds can be performed by thermal treatment of the substrate at a temperature between 300°C and 100°C as described here above. Accordingly, the present invention provides a method for coating a solid substrate with a photocatalytically active $TiO_2$ layer, comprising the following steps:

(i) deposition of an aqueous dispersion of $TiO_2$ nanoparticles onto the substrate;
(ii)' optionally, thermal treatment of the substrate containing the $TiO_2$ nanoparticles at a temperature below 100°C. This optional step is the first step as described here above.
(ii)" thermal treatment of the substrate containing the $TiO_2$ nanoparticles at a temperature between 300°C and 100°C. This is second step as described here above.

Typically, the $TiO_2$ layers have an excellent photocatalytic activity under UV light, whereas the photocatalytic activity under visible light is poor. However, an excellent photocatalytic activity under visible light can be achieved by using doped $TiO_2$ nanoparticles. Suitable dopants include nitrogen (Asahi et al., Science 2001, vol. 293, p. 269-271; Sato et al., Applied Catalysis A - Genera/ 2005, vol. 284, p. 131-137 ; Irie et al., Journal of Physical Chemistry B 2003, vol. 107, p. 5483-5486), carbon (Irie et al. Chemistry Letters 2003, vol. 32 p. 772-773), sulphur (Umebayashi et al., Applied Physics Letters 2002, vol. 81, pK. 454-456; Ohno et al., Applied Catalysis A - General 2004, vol. 265, p. 115-121) and silver (Herrmann et al., Applied Catalysis B - Environmental 1997, vol. 13, p. 219-228).

The method according to the present invention can be used to obtain $TiO_2$ layers with a thickness between 10 nm and 10 $\mu$m. Preferably, the average thickness of the $TiO_2$ is between 20 nm and 500 nm, even more preferably between 20 nm and 100 nm. In this range, the layers are flexible, exhibit an optimal stability and a good photocatalytic activity.

In particular embodiments, the method for coating a solid substrate with a photocatalytically $TiO_2$ layer according to the present invention, further comprises the step of preparing the aqueous dispersion of $TiO_2$ nanoparticles, as used in step (i) of the method for coating.

The preparation of the nanoparticle dispersion can be performed by heating an aqueous precursor solution, which comprises one or more water-soluble Ti sources and one or more (multidentate) ligands. More particularly, the preparation of the nanoparticle dispersion comprises the steps of:

- Producing an aqueous precursor solution comprising a Ti source and one or more ligands; and
- Producing an aqueous dispersion of $TiO_2$ nanoparticles by adding one or more different ligands (i.e. different than the ligands already present in the precursor solution) to the precursor solution, followed by heating of the precursor solution.

Accordingly, in particular embodiments, the present invention provides a method for coating a solid substrate with a photocatalytically active $TiO_2$ layer, wherein the method comprises the following steps:

a) Producing an aqueous precursor solution comprising a Ti source and one or more ligands.
b) Producing an aqueous dispersion of $TiO_2$ nanoparticles by adding one or more ligands other than the ligands of step a) to the precursor solution, followed by heating of the precursor solution; and
c) Deposition of the aqueous dispersion of $TiO_2$ nanoparticles onto the substrate. This step is the same as step i) as described hereabove, except that the nanoparticle dispersion is prepared via steps a) and b).

d) Thermal treatment of the substrate containing the TiO$_2$ nanoparticles. This step is the same as step ii) - or ii)' and ii)'' - as described hereabove.

Suitable Ti sources for use in step a) are Ti halides (e.g. TiCl$_4$), Ti(SO$_4$)$_2$, Ti-alkoxides, or a combination thereof. In particular embodiments, at least one of the one or more Ti sources is a Ti-alkoxide. Ti-alkoxides are compounds of the general formula "Ti-OR", wherein "R" is a straight or branched chain alkyl group, preferably a lower alkyl of size C$_1$-C$_{110}$. Examples of suitable Ti-alkoxide are titanium (IV) butoxide, titanium (IV) isopropoxide and titanium (IV) propoxide. In particular embodiments, the Ti-alkoxide is titanium propoxide. In particular embodiments, the aqueous precursor solution comprises one water-soluble Ti source and one or more multidentate ligands.

The ligands for use in steps a) and b) are ligands and/or multidentate ligands as described hereabove. Preferred multidentate ligands for use in step a) are citric acid, acetylacetone, ditheylenetriaminepentaacetic acid, ethylenediaminetetraacetic acid (EDTA) and triethanolamine. Instead of EDTA, also salts of EDTA such as sodium-EDTA and disodium-EDTA can be used. Preferably, the (multidentate) ligands in step a) are used in a 0.25-2:1 ratio to Ti, more preferably in a ratio about 0.5:1 to Ti.

Preferred multidentate ligands for use in step b) are ethylene glycol, polyethylene glycol, glycine, and glycerine. Preferably, the concentration in the nanoparticle dispersion of ligands added in step b) is below five percent by weight, more preferably below three percent by weight, for example about two percent by weight.

In particular embodiments, the aqueous precursor solution of step a) further comprises an alcohol as described hereabove. Alcohols may help to dissolve the Ti source and to control hydrolysis during water addition. In particular embodiments, the concentration of the alcohol in the dispersion is less than 1 M. Preferably, the ratio of alcohol to Ti in the precursor solution is about 0.5-5:1, more preferably about 1-3:1. In preferred embodiments, the solution in step a) is prepared by dissolving the Ti source in the alcohol prior to the addition of the one or more ligands and water.

In particular embodiments, the aqueous precursor solution of step a) further comprises a quaternary ammonium compound as described hereabove. Quaternary ammonium compounds may be used as peptizing agents.

The heating of the aqueous precursor solution in step b) may be performed via hydrothermal treatment or by microwave assisted thermal treatment. In preferred embodiments, the heating of the aqueous precursor solution is performed by microwave assisted thermal treatment. In further embodiments, the temperature range obtained during microwave assisted thermal treatment is between 100°C and 140°C. In preferred embodiments, the heating time during microwave assisted thermal treatment is between 5 and 60 minutes, more preferably between 5 and 30 minutes, and even more preferably between 10 and 20 minutes, for example about 15 minutes.

Typically, the nanoparticles obtained in step b) have a size between 1 nm and 1000 nm. The particle size and shape can be controlled in various ways, for example by using specific ligands, using different temperatures, and different reaction times. The nanoparticles obtained in step b) are typically crystalline, therefore the obtained nanoparticles are nanocrystals.

The nanoparticle dispersion obtained in step b) may be used in step c) as such, or may be modified prior to use in step c). For example, additives may be used to optimize the acidity and/or the viscosity of the dispersion.

In a further aspect, the present invention provides substrates, which are coated by the method for coating a solid substrate according to the present invention. The coating provides self-cleaning, antibacterial and/or antifogging properties to the substrate.

In yet a further aspect, the present invention provides an aqueous dispersion of TiO$_2$ nanoparticles, prepared according to steps a) and b) as described herein. In particular embodiments, the aqueous dispersion of TiO$_2$ nanoparticles is prepared according to steps a) and b) as described hereabove.

In a further aspect, the present invention provides the use of an aqueous dispersion of TiO$_2$ particles as described herein, for making a photocatalytically active TiO$_2$ layer. More particularly, the present invention provides the use of an aqueous dispersion of TiO$_2$ particles in a coating method according to the present invention.

The present invention will be illustrated by the following non-limiting examples.

## EXAMPLES

a) Synthesis of nanoparticles

Three different TiO$_2$ precursor solutions were prepared, using titanium propoxide (TIP) as the Ti$^{(4+)}$ source, with different combinations of triethanolamine (TEA), diethylenetriaminepentaacetic acid (DTPA) and ethylenediaminetetraacetic acid (EDTA) as complexing agents, and water as the primary solvent. In some cases, small amounts of ethanol (EtOH) were used to dissolve the metal alkoxide and to help controlling the hydrolysis during water addition. Tetramethylammonium hydroxide (TMAH) was used in some cases for peptization as basic catalyst.

*Solution 1* - TIP was dissolved in EtOH in a 3:1 molar ratio to Ti$^{4+}$, and DTPA was added (0.5:1 molar ratio to Ti$^{4+}$) under stirring. TEA was added to the solution to increase the pH value of the solution to 8. After stirring for one hour, H$_2$O in 78:1 molar ratio to Ti$^{4+}$ was rapidly added to the solution in order obtain a final Ti$^{4+}$ concentration of 0.5 M.

*Solution 2* - TIP was dissolved in EtOH in a 3:

1 molar ratio to Ti$^{4+}$, and EDTA was added (0.5:1 molar ratio to Ti$^{4+}$) under stirring. TEA was added to the solution to increase the pH value of the solution to 8. After stirring for one hour, H$_2$O in 100:1 1 molar ratio to Ti$^{4+}$ was rapidly added to the solution in order obtain a final Ti$^{4+}$ concentration of 0.4 M.

_Solution 3_ - TMAH (3.5:1 molar ratio to Ti$^{4+}$) was mixed with H$_2$O (103:1 molar ratio to Ti$^{4+}$). Separately, TIP was dissolved in 2-propanol in 1:1 molar ratio to Ti$^{4+}$, and EDTA was added (0.5:1 molar ratio to Ti$^{4+}$) under stirring. After stirring for one hour, TIP+IPA mixture was slowly dropped into the water-TMAH mixture over forty minutes while cooling down in an ice bath.

The synthesis of the nanoparticles was done by thermal treatment of the precursor solutions using microwave assisted thermal treatment. Before the thermal treatment different surfactants such as ethylene glycol (EG), polyethylene glycol (PEG), glycine, polyvinylpyrolidone (PVP), and/or glycerine, were added to the solutions in about two percent by weight, in order to stabilize the nanoparticles and to determine the nanoparticle shape during the particle growth. The temperature range obtained using microwaves was 100-140°C, and the reaction (heating) time was varied between 10 and 20 min.

The pH of the nanoparticle dispersions obtained using Solutions 1 or 2 is about 8, the pH of the nanoparticle dispersions obtained using Solution 3 is about 13. X-Ray Diffraction experiments indicate that the nanoparticles are typically nanocrystals comprising anatase and/or brookite phases. The obtained nanoparticle dispersions were stored in sealed recipients at room temperature, and were stable for several months. The stability of the dispersions is advantageous for ink-jet printing, due to the absence of the formation of precipitates, which can block the printer nozzles. The average particle diameter depends on the type of precursor solution, heating temperature and time, and can be varied between 1 nm and 1000 nm. The particles obtained in the present example typically have a size between 10 to 65 nm.

Using conventional hydrothermal treatment of the solutions instead of microwave assisted treatment initially results in similar particles, although the particles quickly agglomerate, resulting in a less homogeneous size of the particles. Moreover, hydrothermal treatment requires six hours or more, and is therefore significantly more time and energy consuming than microwave treatment.

b) Printing of the nanoparticle dispersion

Successful ink-jet printing of the nanoparticle dispersions was obtained using different printers.

As a first example, a single Domino Macrojet electromagnetic nozzle with 90 μm diameter jewel orifice mounted on a Roland x-y plotter was used. The electromagnetic nozzle can dispense highly viscous (up to 1000 cP), non-magnetic inks, producing >1 nL droplets up to 1 kHz. The pressure was set between 0.3 and 0.8 bar.

As a second example, a Dimatix piezoelectric multi-nozzle fully integrated printer (Fujifilm Dimatix Inc. DMP-2831) with a 23 μm diameter jewel orifice was used. The printer can dispense inks (dispersions) with a viscosity up to 10 cP. The dispersions may contain particles with a size up to 1000 nm. The printer can produce droplets with a volume of about 25 to 80 pL with a frequency up to 20 kHz. Typically, the Dimatix printer is able to print films which are of higher quality then the films printed with the Domino Macrojet printer. In particular, thinner films with higher optical transparency are obtained with the Dimatix printer.

The substrates were standard microscope glass slides with dimensions of 20 by 50 mm. A stable jetting could be achieved with all nanoparticle dispersions with both printers. All depositions were performed at room temperature.

c) Thermal treatment

The printed nanoparticle dispersions were subjected to thermal treatment at 60°C during three to four hours. Further thermal treatment was performed in a tube furnace at 100-300°C for one hour with a heating rate of 5°C per minute. The thermal treatment at 60° and the thermal treatment at 100-300°C were both performed under air.

d) Transparency

UV-Vis spectroscopy was used to examine the transparency of the obtained TiO$_2$ layers. As a reference, both uncoated microscopy glass slides ("uncoated") and commercial self-cleaning window glass from Saint-Gobain (SGG Bioclean@ - "SGG") was used. The results are shown in Figure 1.

For the films obtained with the nanoparticle dispersions obtained using precursor solution 2, after thermal treatment of the substrate at 100°C or 200°C ("S2 100°C" and "S2 200°C", respectively), the transmittance at 500 nm is comparable to the transmittance of uncoated glass (89% after coating vs. 90% for uncoated glass). For the films obtained with the nanoparticle dispersions obtained using precursor solutions 1 or 2, after thermal treatment of the substrate at 300°C ("S1 300°C" and "S2 300°C", respectively), the transmittance at 500 nm is about 80%, which is comparable to the commercial self-cleaning window glass from Saint-Gobain.

Thus, the films obtained using the coating method according to particular embodiments the present invention are optically transparent.

e) Photocatalytic activity

The photocatalytic activity of the films obtained after thermal treatment was evaluated by following the degradation of methylene blue in aqueous solution under UV illumination. The experiments were carried out in photocatalytic cells with a near UV-transparent window. An irradiation box equipped with UV fluorescent light tubes was used, having a maximum emission at 360 nm and emitting 71.7 $\mu$W cm$^{-1}$ at a distance of 25 cm, i.e. at the sample position during the experiment. The TiO$_2$-coated microscopy slides were shaped identically and inserted in the photocatalytic cell. The methylene blue solutions were stirred during the experiment.

Glass slides coated with TiO$_2$ films according to the coating method of the present invention were compared with a reference sample coated with TiO$_2$ using precursors not comprising nanoparticles, printed using the same parameters and treated at 500°C (according to: Arin et al. J. Eur. Ceram. Soc., 2011, vol. 31, p. 1067-1074). The photocatalytic decomposition of methylene blue is studied as a function of time by measuring the change in the absorbance of a solution or the dye in contact with TiO$_2$ under UV illumination. The photocatalytic process follows a pseudo first-order kinetic mechanism, as described by the following equation:

$$\ln(C/C_0) = -kt$$

Herein C is the concentration of methylene blue after photocatalysis time t, $C_0$ is the initial methylene blue concentration, and k is the kinetic constant of the reaction. The graphical representation of this equation, for TiO$_2$ layers printed from nanoparticle dispersions (prepared from precursor solution 2) and thermally treated at 200°C and 300°C ("Invention 200°C" and "Invention 300°C", respectively) compared to the reference sample as in Arin et al., 2011 ("Reference"), is shown in Figure 2, which clearly shows that the TiO$_2$ layers obtained using the coating method of the present invention has a higher photocatalytic activity, i.e. a higher kinetic constant k, compared to the reference sample.In (heterogeneous) photocatalysis, the photocatalyst surface area is the most important factor to affect the photocatalytic performance. The use of nanoparticles according to the present invention results in an increased surface area, and therefore an increased photocatalytic activity of the films. Yet, these films can be made optically transparent and suitable for real-life applications, where the TiO$_2$ film should not alter the appearance of the substrate to be deposited on.

f) Morphology

The surface roughness of the obtained TiO$_2$ coatings was assessed via Atomic Force Microscopy (AFM). Typical AFM micrographs of TiO$_2$ coatings obtained with the nanoparticle dispersions (obtained using precursor solution 2), after thermal treatment at 100°C 200°C and 300°C are shown in Figure 3 (Figure 3 a, b and c, respectively). Each micrograph shows an area of 5 by 5 $\mu$m. The Root Mean Square surface roughness measured for Figure 3 a, b and c is 3.60 nm, 2.08 nm and 1.50 nm, respectively. The fact that the surface roughness of the coatings is only a few nanometers means that the coatings do not visibly alter the substrate morphology. Yet, the use of nanoparticles increases the total surface area available for photocatalysis.

## Claims

1. A method for coating a solid substrate with a photocatalytically active TiO$_2$ layer, comprising the steps of:

   (i) deposition of an aqueous dispersion of TiO$_2$ nanoparticles onto said substrate;
   (ii) optionally, thermal treatment of said substrate at a temperature below 100°C; and
   (iii) thermal treatment of said substrate at a temperature between 300°C and 100°C.

2. The method according to claim 1, wherein said photocatalytically active TiO$_2$ layer is optically transparent.

3. The method according to claim 1 or 2, wherein said nanoparticles are substantially crystalline.

4. The method according to any one of claims 1 to 3, wherein step (iii) is carried out at a temperature between 150°C and 100°C.

5. The method according to any one of claims 1 to 4, wherein said dispersion has a pH of between 4 and 10.

6. The method according to any one of claims 1 to 5, wherein said dispersion further comprises at least one multidentate ligand selected from the group comprising polyphosphates, diketones, polyamino carboxylic acids, acid anhydrides, diols, triols, polyols, polyethers, aminoalcohols, amino acids and multidentate amines, preferably selected from the group comprising citric acid, acetylacetone, diethylenetriaminepentaacetic acid, ethylenediaminetetraacetic acid and triethanolamine.

7. The method according to any one of claims 1 to 6, wherein said dispersion further comprises an alcohol.

8. The method according to any one of claims 1 to 7, wherein at least 95% of said nanoparticles have a size between 1 and 250 nm.

9. The method according to any one of claims 1 to 8, wherein step (i) is performed via ink-jet printing.

**10.** The method according to any one of claims 1 to 9, wherein said nanoparticles are doped with one or more elements selected from the group comprising nitrogen, carbon, sulphur, silver, or combinations thereof.

**11.** The method according to any one of claims 1 to 10, wherein said method further comprises, prior to step (i), the preparation of said nanoparticle dispersion, said preparation comprising the steps of:

a) producing an aqueous precursor solution comprising a Ti source selected from the group comprising: Ti halides, $Ti(SO_4)_2$ and Ti-alkoxides, preferably Ti alkoxide, and one or more ligands;

b) producing an aqueous dispersion of $TiO_2$ nanoparticles by adding to said precursor solution one or more ligands other than said ligands of step a), and subsequent heating of said precursor solution, preferably by microwave assisted heat treatment.

**12.** The method according to claim 11, wherein at least one of said ligands of step a) and/or step b) is a multidentate ligand selected from the group comprising polyphosphates, diketones, polyamino carboxylic acids, acid anhydrides, diols, triols, polyols, polyethers, aminoalcohols, amino acids and multidentate amines, preferably selected from the group comprising citric acid, acetylacetone, diethylenetriaminepentaacetic acid, ethylenediaminetetraacetic acid and triethanolamine.

**13.** The method according to any one of claims 1 to 12, wherein the average thickness of said $TiO_2$ layer is between 20 and 100 nm.

**14.** A substrate coated with an optically transparent and photocatalytically active $TiO_2$ layer, wherein said layer is obtained via the method according to any one of claims 1 to 13.

**15.** An aqueous dispersion of $TiO_2$ nanoparticles, **characterized in that** said dispersion has a pH between 6 and 9 and further comprises at least one multidentate ligand selected from the group comprising polyphosphates, diketones, polyamino carboxylic acids, acid anhydrides, diols, triols, polyols, polyethers, aminoalcohols, amino acids and multidentate amines, preferably selected from the group comprising citric acid, acetylacetone, diethylenetriaminepentaacetic acid, ethylenediaminetetraacetic acid and triethanolamine.

**16.** The dispersion according to claim 15, wherein at least 95% of said nanoparticles have a size between 1 and 250 nm.

**17.** The dispersion according to claim 15 or 16, further comprising an alcohol, wherein the concentration of said alcohol in said composition is below 1 M.

**18.** The dispersion according to any one of claims 15 to 17, further comprising a quaternary ammonium compound.

**19.** The method according to any one of claims 1 to 12, wherein said substrate is made at least partially of a polymer.

**20.** Use of an aqueous dispersion of $TiO_2$ nanoparticles according to any one of claims 15 to 18, for coating of a solid substrate with a photocatalytically active $TiO_2$ layer.

Figure 1

Figure 2

a

b

c

Figure 3

EP 2 537 957 A1

Europäisches Patentamt
European Patent Office
Office européen des brevets

# EUROPEAN SEARCH REPORT

Application Number

EP 11 17 1348

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GRESSEL-MICHEL E ET AL: "From a microwave flash-synthesized TiO2 colloidal suspension to TiO2 thin films", JOURNAL OF COLLOID AND INTERFACE SCIENCE, ACADEMIC PRESS, NEW YORK, NY, US, vol. 285, no. 2, 15 May 2005 (2005-05-15), pages 674-679, XP004853311, ISSN: 0021-9797, DOI: 10.1016/J.JCIS.2004.12.055 | 1-10, 13-17, 19,20 | INV. C23C18/12 C01G23/053 B82Y30/00 |
| Y | * the whole document * | 11,12 | |
| X | DE 10 2009 035797 A1 (LEIBNIZ INST NEUE MATERIALIEN [DE]) 3 February 2011 (2011-02-03) * paragraphs [0009] - [0014], [0019], [0023], [0028], [0104], [0105], [0136], [0140] - [0144] * | 1,14,19 | |
| X | US 2006/254461 A1 (HONG LIANG [SG] ET AL) 16 November 2006 (2006-11-16) | 15-18,20 | |
| Y | * paragraphs [0006] - [0008], [0027] - [0034], [0039], [0040] * * example 1 * | 11,12 | TECHNICAL FIELDS SEARCHED (IPC) |
| X | SEONG-JIM KIM ET AL: "AQUEOUS TIO2 SUSPENSION PREPARATION AND NOVEL APPLICATION OF INK-JET PRINTING TECHNIQUE FOR CERAMICS PATTERNING", JOURNAL OF MATERIALS SCIENCE LETTERS, CHAPMAN AND HALL LTD. LONDON, GB, vol. 17, no. 2, 15 January 1998 (1998-01-15), pages 141-144, XP000784317, ISSN: 0261-8028 * the whole document * | 15-18 | C23C C01G B82Y |

-/--

The present search report has been drawn up for all claims

| Place of search | Date of completion of the search | Examiner |
|---|---|---|
| The Hague | 27 April 2012 | Le Hervet, Morgan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

15

Europäisches
Patentamt

European
Patent Office

Office européen
des brevets

## EUROPEAN SEARCH REPORT

Application Number

EP 11 17 1348

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | IMALI A. MUDUNKOTUWA ET AL: "Citric Acid Adsorption on TiO 2 Nanoparticles in Aqueous Suspensions at Acidic and Circumneutral pH: Surface Coverage, Surface Speciation, and Its Impact on Nanoparticle-Nanoparticle Interactions", JOURNAL OF THE AMERICAN CHEMICAL SOCIETY, vol. 132, no. 42, 27 October 2010 (2010-10-27), pages 14986-14994, XP55025489, ISSN: 0002-7863, DOI: 10.1021/ja106091q * the whole document * ----- | 15,16 | |
| X | SUGIMOTO T ET AL: "Synthesis of uniform antatase TiO2 nanoparticles by gel-sol method: 3. Formation process and size control", JOURNAL OF COLLOID AND INTERFACE SCIENCE, ACADEMIC PRESS, NEW YORK, NY, US, vol. 259, no. 1, 1 March 2003 (2003-03-01), pages 43-52, XP002265730, ISSN: 0021-9797, DOI: 10.1016/S0021-9797(03)00036-5 * the whole document * ----- | 15 | |
| X | ZHIFENG WANG ET AL: "Controlled crystallization of titanium dioxide particles in the presence of poly(vinyl alcohol) from peroxytitanic acid", COLLOID AND POLYMER SCIENCE ; KOLLOID-ZEITSCHRIFT UND ZEITSCHRIFT FÜR POLYMERE, SPRINGER, BERLIN, DE, vol. 288, no. 4, 14 November 2009 (2009-11-14), pages 433-438, XP019780595, ISSN: 1435-1536 * the whole document * ----- -/-- | 15,16 | TECHNICAL FIELDS SEARCHED (IPC) |

The present search report has been drawn up for all claims

| Place of search | Date of completion of the search | Examiner |
|---|---|---|
| The Hague | 27 April 2012 | Le Hervet, Morgan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 11 17 1348

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | QUANJUN XIANG ET AL: "Microwave-Hydrothermal Preparation and Visible-Light Photoactivity of Plasmonic Photocatalyst Ag-TiO2 Nanocomposite Hollow Spheres", CHEMISTRY - AN ASIAN JOURNAL, vol. 5, no. 6, 28 April 2010 (2010-04-28), pages N/A-N/A, XP55025719, ISSN: 1861-4728, DOI: 10.1002/asia.200900695 * the whole document * | 10 | |
| A | MELIS ARIN ET AL: "Inkjet printing of photocatalytically active TiO2 thin films from water based precursor solutions", JOURNAL OF THE EUROPEAN CERAMIC SOCIETY, ELSEVIER SCIENCE PUBLISHERS, BARKING, ESSEX, GB, vol. 31, no. 6, 21 December 2010 (2010-12-21), pages 1067-1074, XP028153863, ISSN: 0955-2219, DOI: 10.1016/J.JEURCERAMSOC.2010.12.033 [retrieved on 2011-01-07] * the whole document * | 1 | |
| | | | TECHNICAL FIELDS SEARCHED (IPC) |

The present search report has been drawn up for all claims

| Place of search | Date of completion of the search | Examiner |
|---|---|---|
| The Hague | 27 April 2012 | Le Hervet, Morgan |

**ANNEX TO THE EUROPEAN SEARCH REPORT
ON EUROPEAN PATENT APPLICATION NO.**                    EP 11 17 1348

This annex lists the patent family members relating to the patent documents cited in the above-mentioned European search report.
The members are as contained in the European Patent Office EDP file on
The European Patent Office is in no way liable for these particulars which are merely given for the purpose of information.

27-04-2012

| Patent document cited in search report | Publication date | Patent family member(s) | Publication date |
|---|---|---|---|
| DE 102009035797 A1 | 03-02-2011 | DE 102009035797 A1<br>WO 2011012214 A1 | 03-02-2011<br>03-02-2011 |
| US 2006254461 A1 | 16-11-2006 | EP 1721867 A2<br>SG 127749 A1<br>US 2006254461 A1 | 15-11-2006<br>29-12-2006<br>16-11-2006 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ARIN et al.** *J. Eur. Ceram. Soc.,* 2011, vol. 31, 1067-1074
- **ASAHI et al.** *Science,* 2001, vol. 293, 269-271
- **SATO et al.** *Applied Catalysis A - Genera,* 2005, vol. 284, 131-137
- **IRIE et al.** *Journal of Physical Chemistry B,* 2003, vol. 107, 5483-5486
- **IRIE et al.** *Chemistry Letters,* 2003, vol. 32, 772-773
- **UMEBAYASHI et al.** *Applied Physics Letters,* 2002, vol. 81, 454-456
- **OHNO et al.** *Applied Catalysis A - General,* 2004, vol. 265, 115-121
- **HERRMANN et al.** *Applied Catalysis B - Environmental,* 1997, vol. 13, 219-228